Europäisches Patentamt

European Patent Office

Office européen des brevets

(11) Numéro de publication: **0 337 888**
**A1**

## (12) DEMANDE DE BREVET EUROPEEN

(21) Numéro de dépôt: **89401020.6**

(22) Date de dépôt: **13.04.89**

(51) Int. Cl.4: **B 60 R 11/02**
**B 60 R 25/10**

(30) Priorité: **14.04.88 FR 8804940**

(43) Date de publication de la demande:
**18.10.89 Bulletin 89/42**

(84) Etats contractants désignés:
**AT BE CH DE ES FR GB GR IT LI LU NL SE**

(71) Demandeur: **MECANIPLAST**
**11, avenue Anatole France**
**F-92110 Clichy (FR)**

(72) Inventeur: **Pizon, Ernest**
**8, Parc de Béarn**
**F-92210 Saint-Cloud (FR)**

(74) Mandataire: **Michardière, Bernard et al**
**C/O CABINET PEUSCET 68, rue d'Hauteville**
**F-75010 Paris (FR)**

(54) **Dispositif d'alarme pour véhicule automobile, en particulier pour véhicule muni d'un poste autoradio, et poste autoradio équipé d'un tel dispositif.**

(57) Le dispositif d'alarme comprend des moyens de détection (D) à portes logiques (3), propres à établir un signal en réponse à une variation d'au moins un paramètre, des moyens d'alimentation électrique (A, 1), des moyens avertisseurs (B) sensibles au signal provenant des moyens de détection (D), et des moyens (M) pour activer ou mettre hors service les susdits moyens de détection (D). Le dispositif comporte un détecteur de proximité (X, J) intégré dans la façade du poste tournée vers l'habitacle, propre à déclencher immédiatement l'alarme si un corps suffisamment volumineux s'approche du poste.

FIG.1

EP 0 337 888 A1

Description

## DISPOSITIF D'ALARME POUR VEHICULE AUTOMOBILE, EN PARTICULIER POUR VEHICULE MUNI D'UN POSTE AUTORADIO, ET POSTE AUTORADIO EQUIPE D'UN TEL DISPOSITIF.

L'invention est relative à un dispositif d'alarme, notamment contre le vol, pour véhicule automobile, intégré à un poste autoradio et combiné avec l'amplifcateur basse fréquence et les enceintes acoustiques de ce poste autoradio, comprenant des moyens de détection à portes logiques, propres à établir un signal en réponse à une variation d'au moins un paramètre, des moyens d'alimentation électrique, des moyens avertisseurs sensibles au signal provenant des moyens de détection pour déclencher l'alarme, et des moyens pour activer ou mettre hors service les susdits moyens de détection.

L'invention a pour but, surtout, de fournir un dispositif d'alarme du genre défini ci-dessus dont l'installation soit simple et rapide et ne nécessite qu'un minimum de câblerie supplémentaire, et un minimum d'intervention sur la câblerie du véhicule. Il est souhaitable, en outre, que le dispositif présente une grand fiabilité, et une consommation minimale d'énergie.

Selon l'invention, un dispositif d'alarme du genre défini précédemment est caractérisé par le fait qu'il comporte un détecteur de proximité, intégré dans la façade du poste tournée vers l'habitacle, propre à déclencher immédiatement l'alarme si un corps suffisamment volumineux s'approche du poste, lorsque le dispositif d'alarme est en service.

Le détecteur de proximité est un système électrique à absorption de fréquence, propre à générer des oscillations suivant une fréquence de travail, en particulier de l'ordre de 2,7 MHz, et à rayonner des ondes électromagnétiques à cette fréquence par une antenne, cette fréquence se trouvant altérée lorsqu'une masse électrique capacitive, relativement grande vis-à-vis de l'antenne, s'approche de cette dernière, cette masse capacitive pouvant être constituée par un corps humain, ou par une masse métallique, le système étant propre à produire sur une sortie une impulsion déclenchant l'alarme lorsqu'une telle altération de fréquence a lieu.

Le détecteur de proximité peut comprendre un générateur d'oscillations, dont la sortie est reliée à l'antenne, un détecteur haute fréquence relié à la sortie du générateur, et un détecteur à seuil dont une entrée est reliée à une source de signal de référence et dont un autre entrée est reliée à la sortie du détecteur haute fréquence, la sortie du détecteur à seuil étant propre à basculer lorsque les oscillations disparaissent ou sont considérablement réduites.

Les portes logiques des moyens de détection sont des portes à haute impédance, en particulier à base de transistors du type MOS FET, permettant de détecter des états pratiquement sans consommation de courant et sans nécessiter d'autre contact ou interrupteur électrique que ceux équipant normalement le véhicule.

Le conduteur d'entrée de la (des) porte(s) logique(s) est relié à une borne d'un interrupteur de porte ou de coffre équipant normalement le véhicule, borne qui se trouve isolée de la masse lorsque la porte ou le coffre est normalement fermé et reliée à la masse lorsque cette porte ou ce coffre est ouvert.

La (les) porte(s) logique(s) des moyens de détection sont propres à basculer sur leur sortie et à provoquer le déclenchement de l'alarme par disparition de la masse sur le conducteur électrique d'entrée, en particulier pour assurer une protection de lunette arrière en reliant une extrémité de la résistance de dégivrage à ce conducteur.

Les moyens pour activer ou mettre hors service les moyens de détection comprennent un module propre à fournir, sur une sortie, un signal d'activation, en particulier temporisé, lorque le contact général du véhicule est coupé.

Les moyens de détection comprennent un module propre à produire, sur une sortie, un signal de déclenchement qui maintient le dispositif en alarme et empêche l'utilisation du poste si de dernier, après avoir été arraché, est de nouveau branché sur une source d'énergie électrique.

L'invention consiste, mises à part les dispositions exposées ci-dessus, en un certain nombre d'autres dispositions dont il sera plus explicitement question ci-après à propos d'un exemple de réalisation décrit avec référence aux dessins ci-annexés, mais qui n'est nullement limitatif.

La figure 1 de ces dessins est un schéma blocs d'un dispositif d'alarme, pour véhicule automobile, conforme à l'invention.

La figure 2, enfin, est un schéma électrique du détecteur de proximité.

En se reportant aux dessins, on peut voir un dispositif d'alarme contre le vol, pour véhicule automobile, qui comprend des moyens de détection D propres à établir un signal en réponse à une variation d'au moins un paramètre, des moyens d'alimentation électrique A pour les moyens de détection D, des moyens avertisseurs B sensibles au signal provenant des moyens de détection D et des moyens M pour activer ou mettre hors service les moyens de détection D.

Les moyens d'alimentation électrique A comprennent une alimentation stabilisée 1 avec régulation électronique ajustée de telle sorte qu'une variation de la tension du + batterie, qui fournit l'énergie à l'alimentation 1, ne déclenche pas intempestivement l'alarme. On peut prévoir un interrupteur d'arrêt d'urgence 2 monté sur le conducteur électrique reliant l'alimentation 1 au + batterie. Cet interrupteur 2 est disposé en un endroit caché, d'accès difficile.

L'alimentation régulée 1 sert à alimenter, par sa sortie a, une partie des circuits électroniques du dispositif, et en particulier des portes logiques telles que 3 prévues dans un module W appartenant aux moyens de détection. Ces portes logiques sont des portes à haute impédance d'entrée, notamment supérieure à 100 K$\Omega$ en particulier réalisées à base de transistors MOS FET, permettant de détecter des états (potentiels) sur l'entrée de détection de la porte logique, pratiquement sans consommation de courant.

Le module W est formé par un ensemble de portes logiques 3, notamment des portes NON ET (NAND) et NON OU (NOR) de manière à fournir sur sa sortie 4 une impulsion négative lorsqu'un changement d'état, correspondant à une variation d'un paramètre, est détecté.

L'entrée de la commande de l'alarme, sur la porte logique telle que 3, est réalisée avec un seul conducteur électrique 5, la porte 3 étant propre à détecter la variation d'état, c'est-à-dire de potentiel, de ce conducteur électrique 5 par rapport à la masse.

Dans l'exemple représenté sur le dessin, le conducteur 5 est relié, en parallèle, aux anodes de deux diodes 6, 7. La cathode de la diode 6 est reliée à une borne 8 d'un interrupteur de porte 9 du véhicule; cette borne 8 est reliée, par l'intermédiaire d'une charge 10, par exemple une ampoule, à la borne + de la batterie. L'autre borne de l'interrupteur 9 est reliée à la masse. La fermeture de l'interrupteur 9 provoque la mise à la masse de la cathode 6 et donc du conducteur 5, ce qui est détecté par le module W qui fournit, sur sa sortie 4, un signal, avantageusement une impulsion négative comme déjà indiqué précédemment. La cathode de la diode 7 peut être branchée d'une manière similaire à celle de la diode 6, éventuellement par l'intermédiaire d'une diode supplémentaire 11.

Le module W peut également détecter un changement d'état d'un conducteur électrique 12, relié à un autre entrée de porte logique, par disparition de la mise à la masse de ce conducteur 12. Dans l'exemple considéré, le conducteur 12 est relié à l'extrémité 13 de la résistance 14 de dégivrage ou de désembuage de la lunette arrière du véhicule ; l'autre extrémité de cette résistance 14 est reliée à la masse. Un interrupteur 15 est prévu sur une ligne reliant l'extrémité 13 à la borne + de la batterie. Cet interrupteur 15 est normalement ouvert et le conducteur 12 se trouve mis au potentiel de la masse par la résistance 14 dans laquelle aucun courant ne circule.

Si la lunette arrière du véhicule est brisée, la résistance 14 est coupée et le conducteur 12 n'est plus relié à la masse. Ce changement d'état est détecté par le module W qui produit un signal de déclenchement sur sa sortie 4.

Cette sortie 4 est reliée à une entrée 16 d'un module Y appartenant à un circuit de déclenchement 17 de l'alarme. Le module Y est formé par un ensemble de portes logiques et est propre à délivrer, sur sa sortie 18, un signal électrique pour activer les amplificateurs d'un poste autoradio et une sirène ou tout autre accessoire propre à manifester l'état de mise en alarme.

Le module Y est agencé pour déclencher l'alarme après un retard de quelques secondes, notamment de l'ordre de 6 secondes lorsqu'il reçoit une impulsion sur son entrée 16 en provenance du module W. Ce retard permet à l'utilisateur autorisé d'entrer dans le véhicule et de mettre hors service le dispositif d'alarme avant qu'il ne se soit déclenché.

L'alimentation électrique du module Y est assurée à partir de la sortie a de l'alimentation régulée 1.

Le module Y comporte une autre entrée 19. Lorsqu'une impulsion négative arrive sur cette entrée, le module Y délivre un signal de commande instantané sur sa sortie 18, et l'alarme est donc déclenchée immédiatement.

Cette entrée 19 est reliée à la sortie 20 d'un module électronique X qui constitue un détecteur de proximité et qui fait partie des moyens de détection D.

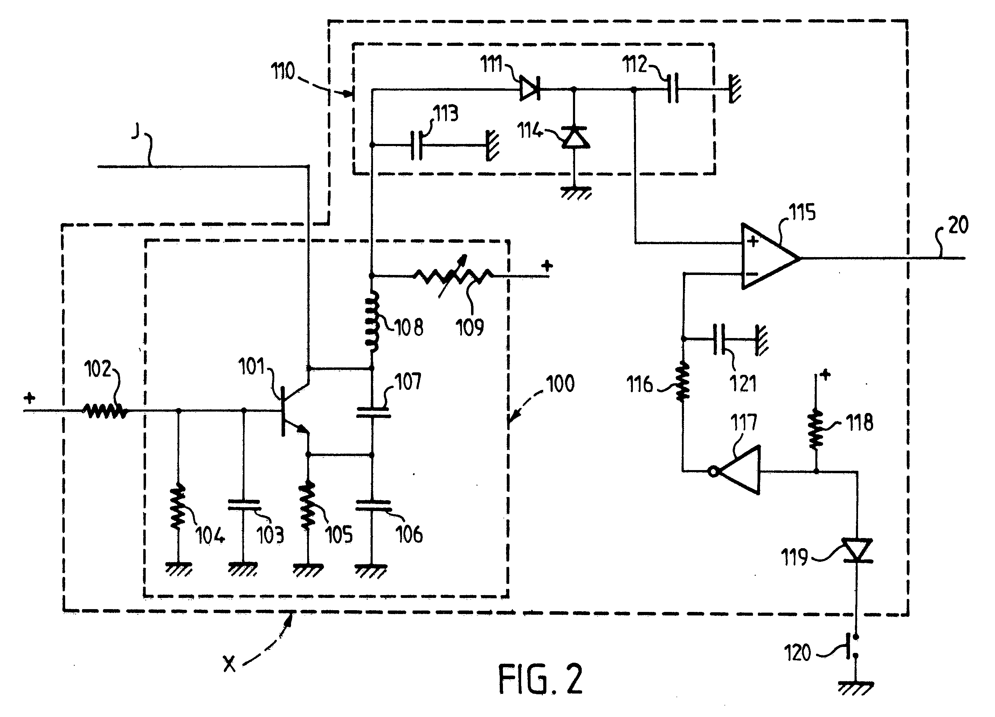

Ce détecteur de proximité X est un système électrique travaillant par absorption de fréquence. Il comprend un générateur d'oscillations 100 (voir figure 2) dont la sortie est reliée à une antenne J propre à rayonner des ondes électromagnétiques à la fréquence des oscillations. La fréquence de travail est avantageusement de l'ordre de quelques MHz, notamment de l'ordre de 2,7 MHz.

Dans un exemple de réalisation, le générateur 100 est construit autour d'un transistor NPN 101, par exemple référence BC 547, dont la base est reliée à la borne + (borne positive) d'une source d'alimentation continue, notamment à 12 volts, par l'intermédiaire d'une résistance 102, notamment de l'ordre de 100 Kohms. La base du transistor 101 est en outre reliée à la masse, en parallèle, par un condensateur 103, dont la capacité a, par exemple, une valeur de l'ordre de 470 pF, et par une résistance 104, d'une valeur de l'ordre de 4,7 Kohms. L'émetteur du transistor 101 est relié à la masse par une résistance 105, d'une valeur de l'ordre de 1 Kohm et par un condensateur 106, d'une valeur de l'ordre de 470 pF, branché en parallèle aux bornes de la résistance 105.

Le collecteur du transistor 101 est relié à l'émetteur par un condensateur 107, par exemple d'une valeur de l'ordre de 23 pF. Ce collecteur est également relié à la borne + de l'alimentation continue par une self 108, par exemple d'une valeur de 33 microhenrys, et par un résistance réglable 109, en série.

Le collecteur de transistor 101 est en outre relié à l'antenne J laquelle est constituée d'un conducteur électrique isolé.

Le détecteur de proximité X, avec l'antenne J, est intégré dans la façade, ou nez, du poste autoradio tournée vers l'habitacle. L'antenne J peut suivre sensiblement le contour rectangulaire de la façade du poste, en formant une sorte de boucle ouverte, d'une longuer d'environ 30 cm.

Le module X comprend un détecteur 110 haute fréquence dont l'entrée est reliée à une extrémité de la self 108. Ce détecteur 110 est propre à redresser les oscillations produites par le générateur 100 et comprend une première diode 111 dont l'anode est reliée à une borne de la self 108, tandis que la cathode est reliée, par l'intermédiaire d'un condensateur 112 à la masse. Ce condensateur 112 peut avoir une valeur de l'ordre de 4,7 nanofarads. Un autre condensateur 113 est branché entre l'anode de la diode 111 et la masse.

Une deuxième diode 114 a son anode reliée à la masse et sa cathode reliée à celle de la diode 111.

Ces deux diodes 111 et 114 permettent de redresser les deux alternances des oscillations.

Le module X comprend en outre un amplificateur opérationnel 115 branché en comparateur, propre à constituer un détecteur à seuil. L'entrée non-inverseuse du comparateur 115 est reliée à la cathode des diodes 111 et 114.

L'entrée inverseuse de 115 est reliée, par l'intermédiaire d'une résistance 116, notamment de l'ordre de 1 Mohm, à la sortie d'une porte inverseuse 117 dont l'entrée est reliée par une résistance 118 à la borne + de l'alimentation positive (+ 12 volts).

L'entrée de la porte 117 est en outre reliée à l'anode d'une diode 119 dont la cathode est reliée à la masse par l'intermédiaire d'un moyen de contact 120 schématiquement représenté.

Ce moyen de contact 120 est en correspondance avec la résistance interne du poste autoradio et, dans la pratique, en peut considérer que le contact 120 est fermé lorsque le poste autoradio est coupé.

D'une manière générale, ce contact 120 doit être fermé lorsque le dispositif d'alarme est mis en marche.

L'entrée inverseuse de 115 est en outre reliée à la masse par un condensateur 121, notamment de l'ordre de 4,7 nanofarads.

La sortie du comparateur 115 constitue la sortie 20 du module X.

Lorsque l'alarme est mise en service, le niveau de tension sur l'entrée inverseuse du comparateur 115 correspond à une valeur de référence de l'ordre de 11,5 volts.

Sur l'entrée non-inverseuse de 115, en l'absence d'oscillations, le niveau de tension est égal à celui de la source, c'est-à-dire 12 volts, diminué de la chute de tension à travers la diode 111 ; cette chute de tension étant de l'ordre de 0,7 volt, la tension sur l'entrée non-inverseuse de 115 est de l'ordre de 11,3 volts en l'absence d'oscillations. Cette valeur est inférieure à la référence présente sur l'entrée inverseuse.

En cas d'oscillations, à un niveau suffisant, du générateur 100, la tension présente sur l'entrée non-inverseuse de 115 se trouve augmentée par l'effet de redressement du détecteur 110 ; la tension se situe par exemple à environ 12,5 volts, c'est-à-dire au-dessus de la valeur de référence présente sur l'entrée inverseuse.

La sortie 20 du comparateur 115 et du module X va donc basculer lorsque les oscillations disparaissent ou sont considérablement réduites.

Lorsqu'une masse capacitive, par exemple la main d'une personne, s'approche du poste autoradio et en particulier de l'antenne J, l'amplitude des oscillations du générateur 100 diminue considérablement ce qui produit, sur la sortie 20 du module X, une impulsion négative qui, envoyée sur l'entrée 19, déclenche immédiatement l'alarme.

Le module X n'est mis en service que lorsque le dispositif d'alarme est activé de façon que ce module X ne rayonne pas en permanence, sa fréquence pouvant perturber les circuits du poste autoradio, lorsque le dispositif d'alarme n'est pas utilisé.

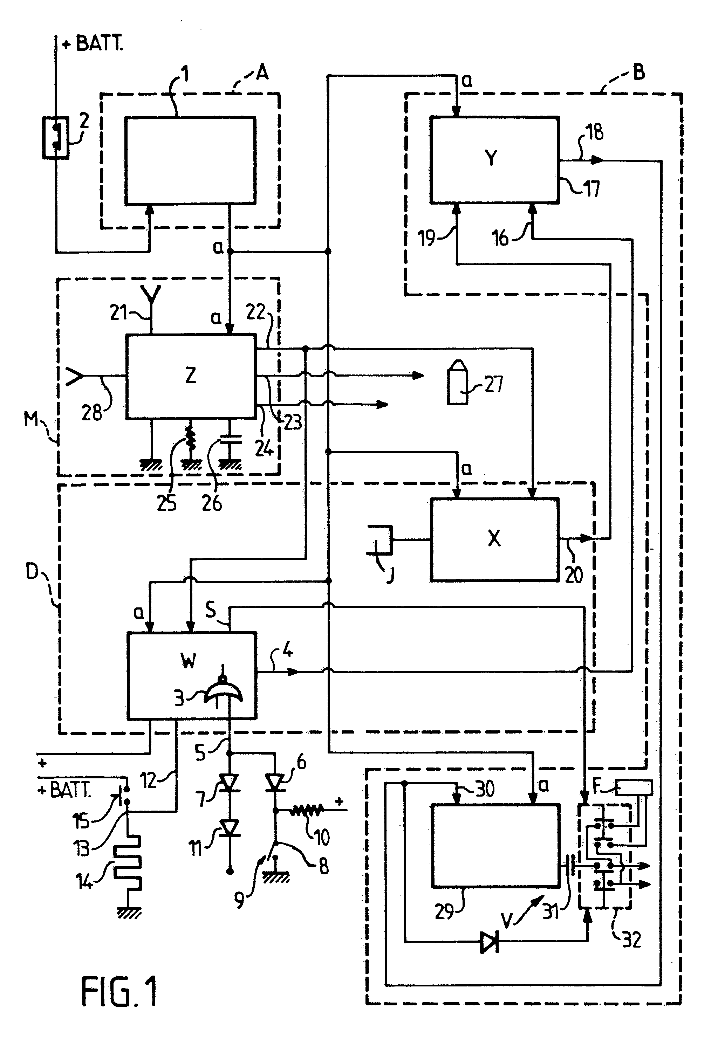

Les moyens M (voir figure 1) pour activer ou mettre hors service les modules W et X comprennent un ensemble de portes logiques Z, également alimenté par la sortie a. Une entrée de ce module Z est reliée, par un conducteur unique 21, à la borne du contact général du véhicule qui se trouve isolée de la borne + de la batterie lorsque le contact est ouvert par la clé de contact. L'ensemble Z est prévu pour délivrer sur ses sorties, par exemple au nombre de trois, 22, 23 et 24, une tension lorsque le contact général du véhicule est coupé.

La sortie 22 est reliée à une entrée d'activation des modules W et X. Le module Z est agencé pour fournir, sur la sortie 22, le signal de tension après la temporisation nécessaire pour permettre à l'utilisateur de sortir du véhicule sans déclencher l'alarme, ainsi que la stabilisation électrique des circuits ; cette temporisation est ajustable par la valeur de la constante de temps RC obtenue avec la résistance 25 et le condensateur 26 branchés respectivement entre une borne du module Z et la masse.

La sortie 23 du module Z permet de commander, par son signal de tension, la mise hors service d'un élément essentiel au fonctionnement du véhicule, par exemple la mise hors service de la bobine d'allumage 27 par coupure de son circuit primaire, à l'aide d'un interrupteur, par exemple du genre ILS, commandé par cette sortie 23. Dans le cas d'un véhicule à moteur diesel, le signal sur la sortie 23 serait utilisé pour bloquer l'alimentation en fuel du moteur.

Le module Z fournit sur sa sortie 24 un signal intermittent utilisé pour alimenter une visualisation par diode électroluminescente (LED), notamment disponible sur le poste autoradio, ou par pictogramme, pour faire apparaître que le dispositif d'alarme a été mis en fonctionnement. Il n'est pas nécessaire de prévoir une temporisation sur les sorties 23 et 24, bien qu'une telle temporisation, semblable à celle de la sortie 22, soit possible.

Une entrée 28 de télécommande peut être prévue sur le module Z pour permettre de désactiver, à distance, le dispositif d'alarme. Toutefois, la désactivation commandée par cette entrée 28 n'intervient qu'au niveau du signal de la sortie 22 pour éviter les manifestations optiques ou sonores de l'alarme. Par contre, le signal sur la sortie 23 qui bloque le fonctionnement du véhicule subsiste malgré l'actionnement de l'entrée 28 ; le signal sur la sortie 23 ne disparaîtra que lorsque le contact général aura été mis et que le conducteur unique 21 se trouvera relié à la borne + de la batterie.

Le dernier module V de l'alarme comprend une sirène électronique 29, alimentée par la sortie a et dont la mise en fonctionnement est commandée par le signal provenant de la sortie 18 et envoyé sur l'entre 30 de mise en service de cette sirène 29. La sortie de la sirène est reliée, par l'intermédiaire d'un condensateur 31, et la commutation basse frequence 32 au circuit basse frequence de l'autoradio. Les moyens de commutation 32 sont commandés par le signal présent sur la sortie 18 du module Y en cas de déclenchement de l'alarme. Les moyens de commutation 32 sont propres à relier en parallèle le récepteur F de l'autoradio sur le circuit basse fréquence. Le signal BF délivré est modulé par les sorties commutées.

Le fait de maintenir ouvert ou fermé l'interrupteur de mise en service du poste auto-radio permet de déterminer deux modes de fonctionnement de l'alarme :
- soit un fonctionnement cyclique lorsque l'interrupteur du poste est fermé ;
- soit un fonctionnement permanent lorsque l'interrupteur du poste est ouvert.

Une sécurité est prévue grâce à une liaison entre une sortie S du module W et une entrée du commande des moyens de commutation 32. Lorsque le module W détecte une variation d'état, un signal est fourni sur la sortie S qui permet de commander la fermeture des moyens de commutation 32.

Ainsi, lorsque le dispositif d'alarme est incorporé dans le poste autoradio, si le poste est arraché ou si les fils sont coupés, en cas de réutilisation future du poste, ce dernier restera en alarme et ne pourra être utilisé.

Lorsque le dispositif d'alarme est incorporé au poste, le branchement de l'alimentation régulée 1 sur la source d'énergie électrique est réalisé automatiquement lorsque le poste est branché.

Les moyens avertisseurs englobent les modules Y et V.

Ceci étant, l'utilisation et le fonctionnement du dispositif d'alarme sont les suivants.

En cours d'utilisation du véhicule, le contact général est fermé de telle sorte que le conducteur 21 est relié à la borne + de la batterie, et le dispositif d'alarme n'est pas activé.

Lorsque l'automobiliste, après avoir arrêté son véhicule, coupe le contact et retire le clé, le conducteur 21 se trouve isolé du + batterie et le module Z va délivrer, avec une temporisation notamment de l'ordre de six secondes, un signal d'activation sur sa sortie 22, comme expliqué précédemment. Cette temporisation permet au conducteur de sortir du véhicule et de le fermer. Le module Z délivre également un signal sur la sortie 23 pour rendre le véhicule inutilisable, par exemple par mise hors d'état de fonctionnement de la bobine d'allumage. Le signal sur la sortie 24, également produit par le module Z, met en service la visualisation (par exemple clignotement d'une diode électroluminescente) du dispositif d'alarme.

Si quelqu'un pénètre dans le véhicule, par exemple en ouvrant une porte, le module W détecte cette ouverture et produit sur sa sortie 4 une impulsion qui déclenche le circuit Y lequel va produire avec une temporisation, notamment de l'ordre de six secondes, un signal sur sa sortie 18. Cette temporisation est suffisante pour permettre à l'automobiliste autorisé de mettre le contact à l'aide de la clé et ainsi de mettre sous tension le conducteur 21 ce qui rend inactif le dispositif d'alarme.

Par contre, si la personne qui a pénétré dans le véhicule n'est pas l'automobiliste autorisé, ce délai de temporisation va s'écouler sans que le contact soit mis et l'alarme va se déclencher.

Si cette même personne non autorisée veut saisir le poste autoradio, le module X délivre sur sa sortie 20 une impulsion qui commande aussitôt un signal de déclenchement sur la sortie 18 du module Y et l'alarme fonctionne instantanément.

Si cette personne non autorisée arrache le poste autoradio, ce dernier, comme expliqué précédemment, restera inutilisable car le dispositif d'alarme, incorporé à ce poste, reste à l'état déclenché.

Si le dispositif d'alarme tombe en panne, le module Z ne fonctionne plus et la coupure de la bobine d'allumage (ou le blocage de l'alimentation en fuel) ne peut avoir lieu. Le véhicule reste donc utilisable en cas de panne de l'alarme.

Le dispositif d'alarme, dont la plupart des éléments sont constitués par des modules à base de portes logiques, peut être réalisé sous forme d'un circuit intégré de dimensions réduites, facilement incorporable à un poste autoradio. Le dispositif d'alarme utilise alors d'une manière avantageuse les amplificateurs de l'autoradio (circuit basse fréquence) ainsi que les enceintes acoustiques de ce poste.

La consommation d'un tel dispositif d'alarme est très faible. Le montage du dispositif est rapide ; lorsque le dispositif est intégré au poste autoradio, seuls quelques fils de connexion sont à mettre en place, sans avoir à interrompre la circuiterie électrique du véhicule. L'utilisation, comme capteurs, d'interrupteurs électriques normalement en place sur le véhicule, simplifie le montage.

**Revendications**

1. Dispositif d'alarme, notamment contre le vol, pour véhicule automobile, intégré à un poste autoradio et combiné avec l'amplificateur basse fréquence et les enceintes acoustiques de ce poste autoradio, comprenant des moyens de détection (D) à portes logiques, propres à établir un signal en réponse à une variation d'au moins un paramètre, des moyens d'alimentation électrique (A), des moyens avertisseurs (B) sensibles au signal provenant des moyens de détection pour déclencher l'alarme, et des moyens (M) pour activer ou mettre hors service les susdits moyens de détection, caractérisé par le fait qu'il comporte un détecteur de proximité (X, J), intégré dans la façade du poste tournée vers l'habitacle, propre à déclencher immédiatement l'alarme si un corps suffisamment volumineux s'approche du poste, lorsque le dispositif d'alarme est en service.

2. Dispositif selon la revendication 1, caractérisé par le fait que le détecteur de proximité est un système électrique (X, J) à absorption de fréquence, propre à générer des oscillations suivant une fréquence de travail, en particulier de l'ordre de 2,7 MHz, et à rayonner des ondes à cette fréquence par une antenne (J), cette fréquence se trouvant altérée lorsqu'une masse électrique capacitive, relativement grande vis-à-vis de l'antenne, s'approche de cette dernière, cette masse capacitive pouvant être constituée par un corps humain, ou par une masse métallique, le système étant propre à produire sur une sortie (20) une impulsion déclenchant l'alarme lorsqu'une telle altération de fréquence a lieu.

3. Dispositif selon la revendication 2, caractérisé par le fait que le détecteur de proximité (X) comprend un générateur d'oscillations (100), dont la sortie est reliée à l'antenne (5), un détecteur haute fréquence (110) relié à la sortie du générateur (100), et un détecteur à seuil (115) dont une entrée est reliée à une source de signal de référence et dont une autre entrée est reliée à la sortie du détecteur haute fréquence (110), la sortie du détecteur à seuil (115) étant propre à basculer lorsque les oscillations disparaissent ou sont considérablement réduites.

4. Dispositif selon la revendication 2 ou 3, caractérisé par le fait que l'antenne est constituée d'un conducteur électrique isolé, suivant sensiblement le contour de la façade du poste et formant une sorte de boucle ouverte.

5. Dispositif selon l'une quelconque des revendications précédentes, caractérisé par le fait que les portes logiques (3) des moyens de détection (D) sont des portes à haute impédance, en particulier à base de transistors du type MOS FET, permettant de détecter des états pratiquement sans consommation de courant et sans nécessiter d'autre contact ou interrupteur électrique que ceux (9) équipant normalement le véhicule.

6. Dispositif selon la revendication 5, caractérisé par le fait que le conducteur d'entrée (5) de la (des) porte(s) logique(s) (3) est relié à une borne (8) d'un interrupteur (9) de porte ou de coffre équipant normalement le véhicule, borne qui se trouve isolée de la masse lorsque la porte ou le coffre est normalement fermé et reliée à la masse lorsque cette porte ou ce coffre est ouvert.

7. Dispositif selon la revendication 6, caractérisé par le fait que la (les) porte(s) logique(s) (3) des moyens de détection sont propres à basculer sur leur sortie et à provoquer le déclenchement de l'alarme par disparition de la masse sur le conducteur électrique d'entrée (12), en particulier pour assurer une protection de lunette arrière en reliant une extrémité (13) de la résistance de dégivrage (14) à ce conducteur (12).

8. Dispositif selon l'une des revendications précédentes, caractérisé par le fait que les moyens (M) pour activer ou mettre hors service les moyens de détection (D) comprennent un module (Z) propre fournir, sur une sortie (22), un signal d'activation, en particulier temporisé, lorsque le contact général du véhicule est coupé.

9. Dispositif selon l'une des revendications précédentes, intégré dans un poste autoradio, caractérisé par le fait que les moyens de détection comprennent un module (W) propre à produire, sur une sortie (S), un signal de déclenchement qui maintient le dispositif en alarme et empêche l'utilisation du poste si ce dernier, après avoir été arraché, est de nouveau branché sur une source d'énergie électrique.

10. Poste autoradio équipé d'un dispositif d'alarme selon l'une quelconque des revendications précédentes.

FIG.1

FIG. 2

EP 0 337 888 A1

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| Y | EP-A-0 174 707 (MIN)<br>* page 4, lignes 16-20; revendications 1,3,13-16 *<br>--- | 1-3,5,6,8 | B 60 R 11/02<br>B 60 R 25/10 |
| Y | US-A-4 638 294 (SAKURAI)<br>* colonne 3, ligne 30 - colonne 4, ligne 4 * | 2,3 | |
| A | | 4 | |
| | --- | | |
| Y | GB-A-2 105 083 (SAVATORE)<br>* page 1, lignes 59-69 *<br>--- | 1,5,6,8 | |
| A | FR-A-2 523 340 (L'ELECTROTELEPHONIE)<br>* page 2, lignes 10-16 *<br>--- | 5 | |
| A | DE-U-8 707 406 (DEUTSCHE VITROHM)<br>* page 7, lignes 1-20 *<br>----- | 9 | |

**DOMAINES TECHNIQUES RECHERCHES (Int. Cl.4)**

B 60 R

Le présent rapport a été établi pour toutes les revendications

| Lieu de la recherche | Date d'achèvement de la recherche | Examinateur |
|---|---|---|
| BERLIN | 10-07-1989 | STANDRING M A |